# EUROPEAN PATENT APPLICATION

(11) **EP 4 280 150 A1**
(43) Date of publication of application: **22.11.2023**
(21) Application number: 21919271.3
(22) Date of filing: 13.01.2021
(51) Int. Cl.: G06Q 50/06

(54) **DATA STORAGE METHOD, DATA STORAGE PROGRAM, AND INFORMATION PROCESSING DEVICE**

(71) Applicant: FUJITSU LIMITED, Kawasaki-shi, Kanagawa 211-8588 (JP)
(72) Inventor: MIYAMAE, Takeshi, Kawasaki-shi, Kanagawa 211-8588 (JP); KOZAKURA, Fumihiko, Kawasaki-shi, Kanagawa 211-8588 (JP)
(74) Representative: Hoffmann Eitle
(86) International application number: PCT/JP2021/000742
(87) International publication number: WO 2022/153375

(57) **Abstract**

A data storage method including: acquiring first data indicating a production record of a transaction resource produced by a producer and second data indicating a consumption record of the transaction resource consumed by a consumer; generating proof information proving that a condition of consistency between the first data and the second data is satisfied regarding allocation of the transaction resource for the production record of the producer as a supplier of the transaction resource for the consumption record of the consumer; generating third data that includes the proof information and has a data size smaller than a total data size of the first data and the second data; and storing a transaction record that includes the third data and indicates that the transaction resource is consumed by the consumer, in a blockchain storing a transaction history of a supply right of the transaction resource produced by the producer.

## Description

### FIELD

The present disclosure relates to a data storage method, a data storage program, and an information processing device.

### BACKGROUND

Data related to a transaction in which a large number of users participate is managed using a ledger by any method. When the ledger is managed with a centralized-type platform, it is needed to continuously prove whether or not a third party organization that maintains and manages the platform is truly reliable. In particular, in a case where the platform grows and the responsibility or the authority of an administrator increases or when an interest between users of the platform including the administrator is complicated, it is significantly difficult to prove the above.

In recent years, ledger management using a blockchain that can perform decentralized ledger management without placing a reliable third party organization has been proposed. The blockchain is one of distributed ledger technologies in which a plurality of nodes included in a network holds the same database. In the blockchain, a transaction group on the network are collectively processed as a block, and each block is linked using a hash function. Data of the block recorded in the blockchain cannot be retroactively changed unless all subsequent blocks are changed, and the ledger management platform using the blockchain is highly secure against modification.

Since a transaction history of the blockchain is open and falsification of the transaction history is difficult, the blockchain is used in various fields including ledger management of cryptographic assets or the like. As an example of the technology using the blockchain, an electric power exchange system has been proposed that promotes to consume electric power that contributes to environments with a method for contributing to the environments and facilitates introduction and spread of renewable energy.

### SUMMARY

### TECHNICAL PROBLEM

Since ledgers are distributed and managed in a blockchain, a storage cost of the blockchain is higher than databases that are collectively managed by a server. This problem becomes significant when an amount of data to be used increases. For example, in a case where a resource that is actually consumed in a transaction of resources such as electric power is purchased from a producer, a production record and a consumption record within a purchase target period are collated. Since the data of the production record and the consumption record of the resources is sequentially generated, when these pieces of data are managed in the blockchain, a data amount managed by the blockchain increases, and a storage cost increases.

In one aspect, an object of the present disclosure is to reduce a data amount used in a blockchain.

### SOLUTION TO PROBLEM

In one proposal, a data storage method by a computer is provided.

The computer acquires first data indicating a production record of a transaction resource produced by a producer and second data indicating a consumption record of a transaction resource consumed by a consumer. Next, the computer generates proof information that proves that a condition of consistency between the first data and the second data is satisfied for allocating the transaction resources for the production record of the producer as a supplier of the transaction resource for the consumption record of the consumer. Moreover, the computer generates third data that includes the proof information and has a data size smaller than a total data size of the first data and the second data. Then, the computer stores a transaction record including the third data and indicating that the transaction resource is consumed by the consumer in a blockchain in which a transaction history of a supply right of the transaction resource produced by the producer is stored.

### ADVANTAGEOUS EFFECTS OF INVENTION

According to one mode, it is possible to reduce an amount of data used in a blockchain.

The above-described object and other objects, features, and advantages of the present invention will become clear from the following description related to the appended drawings, which represents preferred embodiments as examples of the present invention.

### BRIEF DESCRIPTION OF DRAWINGS

FIG. 1 is a diagram illustrating an example of a data storage method according to a first embodiment.
FIG. 2 is a diagram illustrating an example of a configuration of an electric power exchange system.
FIG. 3 is a diagram illustrating an example of hardware of a node.
FIG. 4 is a block diagram illustrating an example of a function of each node.
FIG. 5 is a diagram illustrating an outline of a transaction of an electric power supply right.
FIG. 6 is a diagram illustrating an example of the transaction of the electric power supply right.
FIG. 7 is a diagram illustrating a first example of the transaction of the electric power supply right.
FIG. 8 is a diagram illustrating a second example of the transaction of the electric power supply right.
FIG. 9 is a diagram illustrating an example of a data structure of a power supply right transaction record.
FIG. 10 is a diagram illustrating an example of information included in a smart meter record and an electric power matching record.
FIG. 11 is a diagram illustrating an example of electric power matching.
FIG. 12 is a sequence diagram illustrating an example of a processing procedure before total electric power supply period start of electric power to be transacted.
FIG. 13 is a sequence diagram illustrating an example of a processing procedure after the total electric power supply period start of electric power to be transacted.
FIG. 14 is a sequence diagram illustrating an example of a processing procedure of issuance and verification of a non-fossil certificate.

### DESCRIPTION OF EMBODIMENTS

Hereinafter, the present embodiment will be described with reference to the drawings. Note that each of the embodiments may be carried out in combination with a plurality of embodiments as long as no contradiction arises.

### [First Embodiment]

First, a first embodiment will be described. The first embodiment is a data storage method for reducing a data amount used in a blockchain by managing transactions of resource supply rights in the blockchain and managing a production record and a consumption record of the resources outside the blockchain.

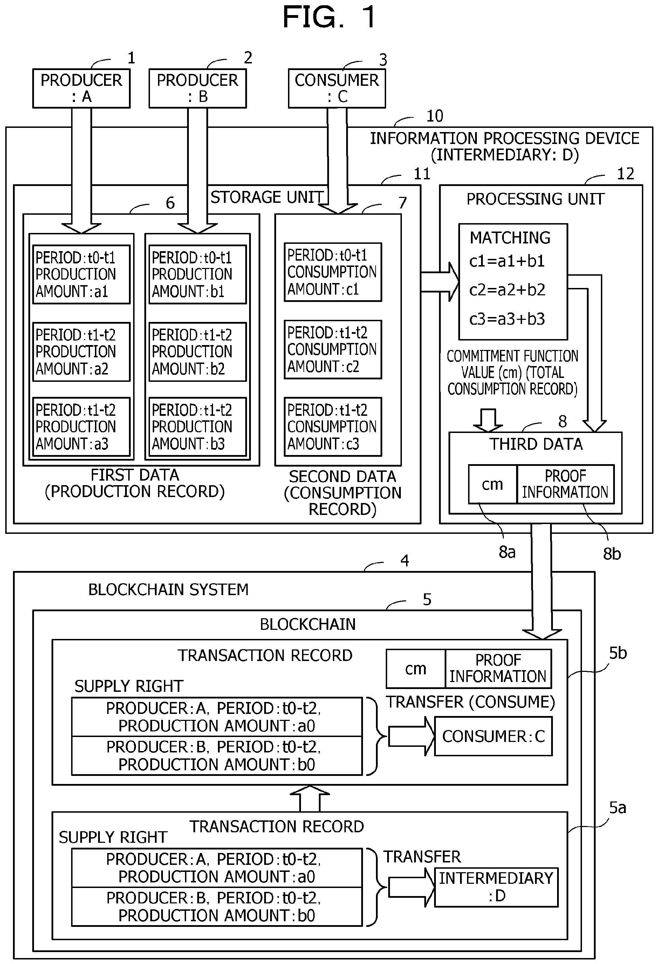

FIG. 1 is a diagram illustrating an example of the data storage method according to the first embodiment. In FIG. 1, a blockchain system 4 and an information processing device 10 outside the blockchain system 4 are illustrated.

The blockchain system 4 includes, for example, a plurality of computers, and the plurality of computers is coupled with peer to peer (P2P). The computer included in the blockchain system 4 may also be referred to as a node. In the blockchain system 4, a blockchain 5 is distributed and stored in the plurality of nodes.

In the blockchain 5, a transaction ledger of supply rights about transaction resources that are produced by producers 1 and 2 and consumed by a consumer 3 is stored. The transaction resource is, for example, an energy resource such as electric power. The transaction resource includes, for example, biofuels using energy of organisms. In a case where a supply right of the transaction resource is transferred, transaction records 5a and 5b indicating the transfer transaction are registered in the blockchain 5.

The producers 1 and 2 have supply rights of transaction resources produced by production facilities of the producers 1 and 2. Then, the producers 1 and 2 can transfer the supply right of the transaction resource to a third party.

For example, when the producers 1 and 2 transfer the supply rights of the transaction resources, the transaction record 5a indicating transaction content is registered in the blockchain 5. The transaction record 5a indicates that the producer 1 with an ID "A" and the producer 2 with an ID "B" transfer transaction resources to an intermediary with an ID "D".

The information processing device 10 is, for example, a computer that includes a storage unit 11 and a processing unit 12. The information processing device 10 can execute the data storage method according to the first embodiment, for example, by executing a data storage program in which a predetermined processing procedure is written. The storage unit 11 is, for example, a memory included in the information processing device 10 or a storage device. The processing unit 12 is, for example, a processor included in the information processing device 10 or an arithmetic circuit.

The information processing device 10 is, for example, a device owned by the intermediary (ID [D]) having the supply rights of the transaction resources produced by the producers 1 and 2. After the producers 1 and 2 have produced the transaction resources, the intermediary "D" can conclude a supply contract based on the supply rights of the transaction resources with the consumer 3 (ID [C]). In order to execute the supply contract, it is assumed that a production record of the transaction resources by the producers 1 and 2 is equal to or more than a consumption record by the consumer 3.

Therefore, the processing unit 12 of the information processing device 10 acquires first data 6 indicating the production record of the transaction resources produced by the producers 1 and 2 and second data 7 indicating the consumption record of the transaction resource consumed by the consumer 3. For example, the processing unit 12 acquires data indicating a time-series change of a production amount measured by a measuring instrument attached to a production facility of each of the producers 1 and 2, as the first data 6. For example, the processing unit 12 acquires data indicating a time-series change of a consumption amount measured by a measuring instrument attached to a consumption facility of the consumer 3, as the second data 7. The processing unit 12 stores the acquired first data 6 and second data 7 in the storage unit 11.

The processing unit 12 generates proof information 8b that proves that a condition of consistency between the first data 6 and the second data 7 is satisfied for allocating the transaction resources corresponding to the production record of the producers 1 and 2, as a supplier of the transaction resource corresponding to the consumption record of the consumer 3. The proof information 8b is, for example, a value of a zero-knowledge proof. As the zero-knowledge proof, for example, a non-interactive zero-knowledge proof is used.

For example, the processing unit 12 compares the production record indicated by the first data 6 and the consumption record indicated by the second data 7, for each unit period in a predetermined resource supply period. The processing unit 12 generates proof information 8b that proves that a condition that there is a production amount that covers a consumption amount for each unit period is satisfied.

Furthermore, the processing unit 12 may calculate a commitment function value 8a for a total amount (total consumption record) of the consumption record indicated by the second data 7. In this case, the processing unit 12 generates the proof information 8b that proves that the condition of consistency between the first data 6 and the second data 7 is satisfied and the commitment function value 8a is correct.

Moreover, the processing unit 12 generates third data 8 that includes the proof information 8b and has a data size smaller than a total data size of the first data 6 and the second data 7. Note that, in a case where the proof information 8b proves that the commitment function value 8a is correct, the processing unit 12 includes the commitment function value 8a in the third data 8.

The processing unit 12 stores the transaction record 5b indicating that the transaction resource including the third data 8 is consumed by a consumer in the blockchain 5 that stores a transaction history of the supply rights of the transaction resources produced by the producers 1 and 2. For example, the processing unit 12 transmits the transaction record 5b to the blockchain system 4. The blockchain system 4 verifies validity of the transaction record 5b. For example, one node in the blockchain system 4 verifies that the consistency condition between the first data 6 and the second data 7 is satisfied, based on the proof information 8b. The node adds a block including the transaction record 5b to the blockchain 5 in a valid case.

In this way, the production record and the consumption record are managed outside the blockchain system 4, and the third data 8 generated by aggregating the production record and the consumption record is stored in the blockchain. As a result, a data amount of the blockchain 5 can be reduced. Note that the consistency between the production record and the consumption record is proved by the proof information 8b. Therefore, by verifying the proof information 8b, the blockchain system 4 can verify the consistency between the production record and the consumption record, without managing the first data 6 and the second data 7 in the blockchain system 4. If the proof information 8b is the value of the zero-knowledge proof, the node of the blockchain system 4 can verify the validity of the proof information 8b, by executing verification processing of the applied zero-knowledge proof.

If the production record and the consumption record are managed outside the blockchain system 4, the production record of the producer and the consumption record of the consumer can be concealed. In other words, if the production record and the consumption record are managed in the blockchain system 4, the production record and the consumption record need to be public information. On the other hand, if the production record and the consumption record are managed outside the blockchain system 4, the production record and the consumption record can be managed as undisclosed information by the information processing device 10 or the like that handles the production record and the consumption record. As a result, privacy of the producers and the consumers is protected.

Furthermore, in the blockchain system 4, for example, transaction information of rights to supply the transaction resources on the blockchain 5 can be managed in an unspent transaction output (UTXO) method. In this case, the node in the blockchain system 4 specifies a transaction resource to be targets of input and output in the UTXO method, based on production periods and a production amount per unit time of the producers 1 and 2. In this way, by specifying the transaction resource to be transacted based on two-dimensional information including the production period and the production amount, it is possible to apply the UTXO method to the transaction of the supply right of the transaction resource, such as electric power, in which a production period and a consumption period are required to match. Then, by using the UTXO method, it is possible to prevent the same transaction resource from being transferred to a plurality of parties (double counting).

Note that validity of the producers 1 and 2 and the consumer 3 can be proved using an electronic signature technology. For example, the processing unit 12 of the information processing device 10 acquires the first data 6 including first electronic signatures of the producers 1 and 2 regarding the production record and the second data 7 including a second electronic signature of the consumer 3 regarding the consumption record. Then, the processing unit 12 generates the proof information 8b that proves that the condition of consistency between the production record and the consumption record is satisfied and the first electronic signatures of the producers 1 and 2 and the second electronic signature of the consumer 3 are valid.

This ensures that the first data 6 is a production record of a producer about a supply right indicated by the blockchain 5. Furthermore, the proof information 8b also proves who the consumer 3 is. The fact that the consumer 3 can be proved is useful, for example, in a case where the consumer 3 proves that a transaction resource produced using non-fossil energy is consumed.

Note that a person who can transfer the transaction resources produced by the producers 1 and 2 is a person who has the supply right of the transaction resources (for example, intermediary with ID "D"). Therefore, for example, the processing unit 12 of the information processing device 10 stores the transaction record 5b including an electronic signature of the person who has the right to supply the transaction resource in the blockchain 5, in the blockchain 5. As a result, in the blockchain system 4, it can be confirmed that the transaction record 5b of the transfer transaction is based on intention of the person who has the right to supply the transaction resource.

### [Second Embodiment]

Next, a second embodiment will be described. The second embodiment relates to reduction of a data amount in a case where a ledger of an electric power transaction is managed by a blockchain.

### <System Configuration>

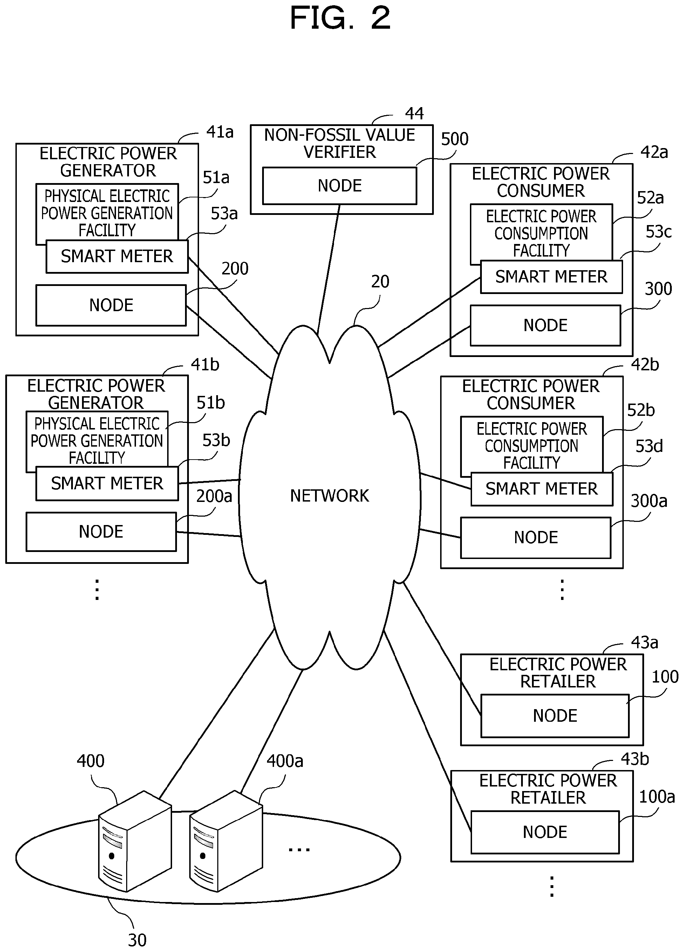

FIG. 2 is a diagram illustrating an example of a configuration of an electric power exchange system. To a network 20, a plurality of nodes 400, 400a, ... included in a blockchain system 30 is coupled. The plurality of nodes 400, 400a, ... is communicably coupled to each other with P2P. The plurality of nodes 400, 400a, ... operate in cooperation so that ledgers of electric power transactions are distributedly managed by the blockchain.

The electric power transactions are conducted between electric power generators 41a, 41b, ..., electric power retailers 43a, 43b, ..., and electric power consumers 42a, 42b, .... A user who is a participant of the electric power transaction includes nodes 100, 100a, ..., 200, 200a, ... 300, 300a, ... 400, 400a, ... each coupled to the network 20. The nodes 100, 100a, ..., 200, 200a, ... 300, 300a, ... 400, 400a, ... are computers used for transactions of rights to supply electric power.

The electric power generator 41a has a physical electric power generation facility 51a. The physical electric power generation facility 51a is an electric power generation facility using fossil fuels such as oil, gas, coals or an electric power generation facility using renewable energy such as hydraulic, solar, or wind power. The physical electric power generation facility 51a supplies the generated electric power to an electric power supply network (system for power transformation, transmission, and distribution). A smart meter 53a is attached to the physical electric power generation facility 51a, and the generated electric power is measured by the smart meter 53a. The smart meter 53a is coupled to the network 20. The electric power measured by the smart meter 53a is read by the node 200 of the electric power generator 41a.

Similarly, the electric power generator 41b also has a physical electric power generation facility 51b to which a smart meter 53b is attached. The electric power measured by the smart meter 53b is read by the node 200a of the electric power generator 41b.

The electric power consumer 42a has an electric power consumption facility 52a. The electric power consumption facility 52a is a factory that includes a device using electric power such as a factory, a house, or an office. The electric power consumption facility 52a receives supply of electric power via the electric power supply network. A smart meter 53c is attached to the electric power consumption facility 52a, and the consumed electric power is measured by the smart meter 53c. The smart meter 53c is coupled to the network 20. The electric power measured by the smart meter 53c is read by the node 300 of the electric power consumer 42a.

Similarly, the electric power consumer 42b has an electric power consumption facility 52b to which a smart meter 53d is attached. The electric power measured by the smart meter 53d is read by the node 300a of the electric power consumer 42b.

The electric power retailers 43a, 43b, ... purchase electric power supply rights, for example, from the electric power generators 41a, 41b, ... using the nodes 100, 100a, ... and sell electric power to the electric power consumers 42a, 42b, ... within a range of the electric power supply right. The electric power supply rights can be transacted between the electric power retailers 43a, 43b, ....

The ledgers of the electric power supply right transactions are managed with the blockchain. For example, in a case where the electric power generator 41a sells the electric power supply right, the node 200 generates a transaction record (electric power supply right transaction record) indicating transaction content of the electric power supply right. The node 20a transmits the generated electric power supply transaction record to any one of the nodes of the blockchain system 30. When validity of the electric power supply transaction record is verified by the blockchain system 30, the electric power supply transaction record is registered in the blockchain.

A non-fossil value verifier 44 verifies validity of a non-fossil certificate with a node 500 and certifies that electric power generated using renewable energy is used. The non-fossil certificate is a certificate of a non-fossil value of electric power generated using renewable energy. The non-fossil certificate is issued by the node 100 of the electric power retailer 43a that supplies the electric power generated using renewable energy. The issued non-fossil certificate is passed to the node 300 of the electric power consumer 42a that receives the supply of the electric power. The electric power consumer 42a transmits the non-fossil certificate from the node 300 to the node 500. Then, the node 500 verifies that the non-fossil certificate is valid.

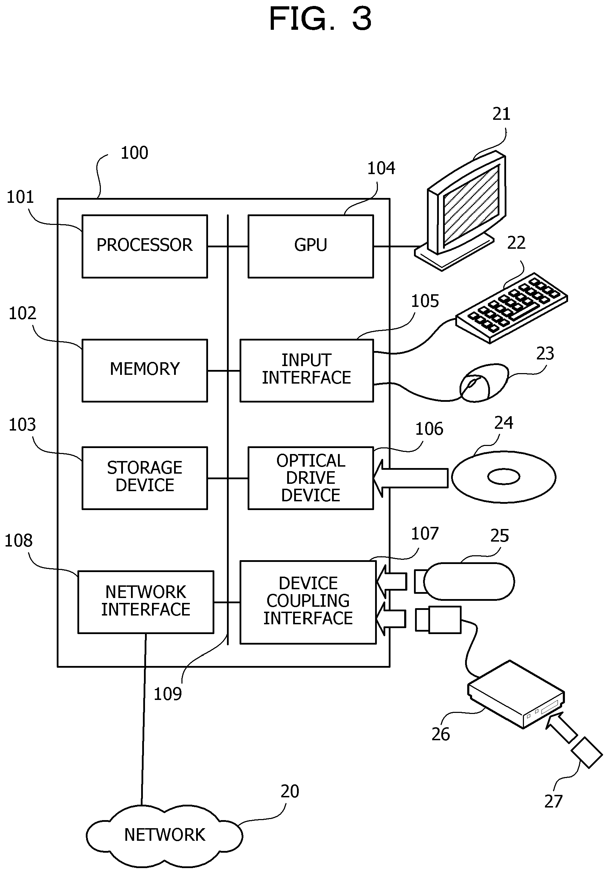

FIG. 3 is a diagram illustrating an example of hardware of a node. In FIG. 3, a hardware configuration of the node 100 is representatively illustrated.

The entire node 100 is controlled by a processor 101. A memory 102 and a plurality of peripheral devices are coupled to the processor 101 via a bus 109. The processor 101 may be a multiprocessor. The processor 101 is, for example, a central processing unit (CPU), a micro processing unit (MPU), or a digital signal processor (DSP). At least some functions implemented by the processor 101 executing a program may be implemented by an electronic circuit such as an application specific integrated circuit (ASIC) or a programmable logic device (PLD).

The memory 102 is used as a main storage device of the node 100. The memory 102 temporarily stores at least some of operating system (OS) programs and application programs to be executed by the processor 101. In addition, the memory 102 stores various types of data to be used in processing by the processor 101. As the memory 102, for example, a volatile semiconductor storage device such as a random access memory (RAM) is used.

Examples of the peripheral devices coupled to the bus 109 include a storage device 103, a graphics processing unit (GPU) 104, an input interface 105, an optical drive device 106, a device coupling interface 107, and a network interface 108.

The storage device 103 electrically or magnetically performs data writing and reading on a built-in recording medium. The storage device 103 is used as an auxiliary storage device of the computer. The storage device 103 stores OS programs, application programs, and various types of data. Note that, as the storage device 103, for example, a hard disk drive (HDD) or a solid state drive (SSD) can be used.

The GPU 104 is an arithmetic unit that executes image processing, and is also called a graphic controller. A monitor 21 is coupled to the GPU 104. The GPU 104 causes an image to be displayed on a screen of the monitor 21 in accordance with an instruction from the processor 101. Examples of the monitor 21 include a display device using organic electro luminescence (EL), a liquid crystal display device, or the like.

A keyboard 22 and a mouse 23 are coupled to the input interface 105. The input interface 105 transmits signals sent from the keyboard 22 and the mouse 23 to the processor 101. Note that the mouse 23 is an example of a pointing device, and another pointing device can also be used. Examples of the another pointing device include a touch panel, a tablet, a touch pad, a track ball, or the like.

The optical drive device 106 uses laser light or the like to read data recorded in an optical disc 24 or write data to the optical disc 24. The optical disc 24 is a portable recording medium in which data is recorded so as to be readable by reflection of light. Examples of the optical disc 24 include a digital versatile disc (DVD), a DVD-RAM, a compact disc read only memory (CD-ROM), a CD-recordable (R)/rewritable (RW), or the like.

The device coupling interface 107 is a communication interface for coupling the peripheral devices to the node 100. For example, a memory device 25 and a memory reader/writer 26 can be coupled to the device coupling interface 107. The memory device 25 is a recording medium in which a communication function with the device coupling interface 107 is mounted. The memory reader/writer 26 is a device that writes data to a memory card 27 or reads data from the memory card 27. The memory card 27 is a card-type recording medium.

The network interface 108 is coupled to the network 20. The network interface 108 transmits and receives data to and from another computer or a communication device via the network 20. The network interface 108 is a wired communication interface coupled to a wired communication device such as a switch or a router with a cable, for example. Furthermore, the network interface 108 may be a wireless communication interface that is coupled to and communicates with a wireless communication device such as a base station or an access point with radio waves.

The node 100 may implement processing functions of the second embodiment using the hardware as described above. Other nodes 31, 32, ..., 200, 300, 400, 500, and 600 illustrated in FIG. 2 can be implemented by the hardware similar to the node 100. Furthermore, the device indicated in the first embodiment can be implemented by the hardware similar to the node 100 illustrated in FIG. 3.

The node 100 implements the processing functions of the second embodiment by, for example, executing a program recorded in a computer-readable recording medium. The program in which processing content to be executed by the node 100 is written can be recorded in various recording media. For example, the program to be executed by the node 100 can be stored in the storage device 103. The processor 101 loads at least a part of the programs in the storage device 103 into the memory 102 and executes the program. Furthermore, the program to be executed by the node 100 may be recorded in a portable recording medium such as the optical disc 24, the memory device 25, the memory card 27, or the like. The program stored in the portable recording medium can be executed after being installed in the storage device 103 under the control of the processor 101, for example. Furthermore, the processor 101 also can read the program directly from the portable recording medium and execute the program.

### <Technical Requirements Required for Electric Power Supply Right Transaction>

The electric power supply right transaction is executed with a system having the configurations illustrated in FIGs. 2 and 3. Here, technical requirements required for a system that executes the electric power supply right transaction will be described.

### [Decentralization]

The first requirement is a decentralized system. In other words, it is required to correctly operate a transaction system on the premise that a reliable third party organization is not placed.

### [Traceability]

The second requirement is to have traceability. The physical electric power generation facilities 51a and 51b may be, for example, electric power generation facilities using renewable energy such as a home solar photovoltaic electric power generation facility. An electric power supply right based on electric power generated with renewable energy is transferred to, for example, the electric power retailers 43a and 43b, and the electric power is supplied to the electric power consumers 42a and 42b based on the electric power supply right. When companies that are the electric power consumers 42a and 42b purchase and consume electric power generated using non-fossil power supply such as solar power, hydraulic power, or geothermal power, the companies are highly evaluated in terms of corporate social responsibility (CSR). Therefore, when purchasing electric power generated using the non-fossil power supply, the electric power consumers 42a and 42b may desire to acquire information (non-fossil certificate) proving that. In order for a consumer of non-fossil electric power to be allowed to obtain a non-fossil value from a verifier of the non-fossil value, it is important to prove that a non-fossil value is based on electric power generated when and with which physical electric power generation facility. Therefore, it is required to correctly track the history of the transaction of the electric power supply right.

### [Double Counting Prevention]

The third requirement is that double counting of the electric power supply right is prevented. The double counting in the electric power transaction is that an electric power supply right generated by one physical electric power generation facility in a certain period is transferred to two different parties. This is important to prevent that electric power generation records of respective physical electric power generation facilities at respective times are misused as a plurality of different electric power generation records.

### [Scalability]

The fourth requirement is to have high scalability. Introduction of small solar power generator systems into individual houses is generalized, and there are about a million small electric power generators. For transactions of electric power supply rights of electric power generated by these small electric power generators, a transaction performance that can manage demand matching about one million or more non-fossil electric power close to real time (in 30 minute units) is required.

### [Storage Cost]

The fifth requirement is to keep storage cost to be low. The electric power is produced by the physical electric power generation facilities 51a and 51b and consumed by the electric power consumption facilities 52a and 52b. It is required to accurately manage electric power generation records and electric power consumption records by these facilities. Each of the smart meters 53a and 53b respectively attached to the physical electric power generation facilities 51a and 51b generates a smart meter record including an amount of electric power generated in past 30 minutes, for each 30 minutes. On the other hand, each of the smart meters 53c and 53d of the electric power consumption facilities 52a and 52b generates a smart meter record including an amount of electric power consumed in past 30 minutes, for each 30 minutes. As a result, a large amount of smart meter records is generated. Therefore, in order to make a system that can be operated for a long time, it is important to keep the storage cost to manage an enormous amount of smart meter records to be low.

### [Privacy]

The sixth requirement is that privacy of a user can be protected. What is positioned as privacy information is, for example, data of the smart meters of the electric power generation records and the electric power consumption records. It is required not to disclose the data of the smart meter to users other than parties involved in the electric power transaction.

### <Outline of Technology for Satisfying Requirements>

In the second embodiment, a system using a blockchain is provided in order to satisfy the six requirements described above. However, by only using the blockchain, it is not possible to satisfy all the technical requirements required for the electric power supply right transactions. In particular, there are the following problems.

First, the blockchain has higher storage cost than a normal database, and processing for verifying data consistency is slower. Moreover, since data is shared between all users in the blockchain, the privacy cannot be maintained if the electric power generation records and the electric power consumption records are stored in the blockchain as they are.

In other words, the blockchain is a technology that can manage transaction ledgers in a distributed manner, and a decentralized system can be constructed by using the blockchain. However, the blockchain has a scalability problem that the blockchain cannot quickly execute processing if the number of transactions becomes too large. Therefore, it is difficult to store all of enormous smart meter records generated for each 30 minutes by a large number of physical electric power generation facilities or electric power consumption facilities in the blockchain as transactions.

Therefore, in the system according to the second embodiment, the enormous smart meter records are not stored in the blockchain, and a downsized electric power matching record is stored in the blockchain by aggregating the smart meter records. As a result, the size of the data to be stored in the blockchain can be reduced, and the scalability problem can be solved.

The electric power matching record is generated by aggregating a smart meter record corresponding to electric power generated by one physical electric power generation facility and a smart meter record of a consumption facility that has consumed the electric power. The electric power matching record includes a "consumption facility ID", a "total electric power supply period", a "total electric power amount commitment", a "zero-knowledge proof", and an "electronic signature by a virtual electric power generation facility". However, a data size is smaller than a total amount of the data of the plurality of smart meter records that is an aggregation source. Therefore, even if the electric power matching record is stored in the blockchain, an increase in the data amount handled by the blockchain is suppressed.

Moreover, in the system according to the second embodiment, by including the "total electric power amount commitment" and the "zero-knowledge proof" in the electric power matching record stored in the blockchain, consistency between the electric power generation record and the electric power consumption record is proved with the zero-knowledge proof. As a result, for example, verification of whether or not the total amount of the electric power generation amount and the total amount of the consumption amount match can be executed while concealing the electric power generation record and the electric power consumption record included in each smart meter record.

In this way, according to the electric power exchange system according to the second embodiment, the downsized electric power matching record is stored in the blockchain. As a result, it is possible to solve the scalability problem of the blockchain and to provide an electric power transaction blockchain system that can verify validity of an electric power transaction while concealing the electric power generation record and the electric power consumption record with the zero-knowledge proof technology.

Note that, it is possible to reduce a data size by compressing data obtained by merging the smart meter record of the physical electric power generation facility and the smart meter record of the consumption facility. Therefore, if a data compression technology is used, it is possible to reduce a capacity of the blockchain. However, the data registered in the blockchain becomes public information. Therefore, by decompressing the compressed data, content of the smart meter record is viewed by a third party. Therefore, in order to reduce the data size of the blockchain while satisfying the privacy protection requirements, it is appropriate to manage the smart meter record outside the blockchain and to register only the electric power matching record in the blockchain.

The electric power supply right transactions are executed between the electric power generators 41a, 41b, ..., the electric power consumers 42a, 42b, ..., and the electric power retailers 43a, 43b, .... Among them, the electric power retailers 43a, 43b, ... can be assumed as an operator of the virtual electric power generation facility, in the electric power supply right transactions. Furthermore, there is a possibility that each of the electric power generators 41a, 41b, ... operates the plurality of physical electric power generation facilities. Similarly, there is a possibility that the electric power consumers 42a, 42b, ... operate the plurality of electric power consumption facilities.

In this way, the user and the physical electric power generation facility or the electric power consumption facility that trade the electric power supply right do not correspond on a one-to-one basis. Then, actual supply and consumption of electric power are performed between the physical electric power generation facility and the electric power consumption facility via the virtual electric power generation facility. Therefore, in order to execute transactions considering the electric power generation records and the electric power consumption records, it is required to identify each of the virtual electric power generation facility, the physical electric power generation facility, and the electric power consumption facility. Therefore, a unique identifier (electric power facility ID) is assigned to each of the virtual electric power generation facility, the physical electric power generation facility, and the electric power consumption facility in advance, and transactions of the electric power supply rights, electric power generation records, and electric power consumption records, are managed using the electric power facility ID. At this time, in the system, each of the virtual electric power generation facility, the physical electric power generation facility, and the electric power consumption facility is assumed as a transaction entity of the electric power supply right. Hereinafter, the virtual electric power generation facility, the physical electric power generation facility, and the electric power consumption facility are collectively referred to as an electric power facility.

### <Function of Node for Electric Power Supply Right Transaction>

Next, a function of each node used for an electric power supply right transaction using the blockchain will be described.

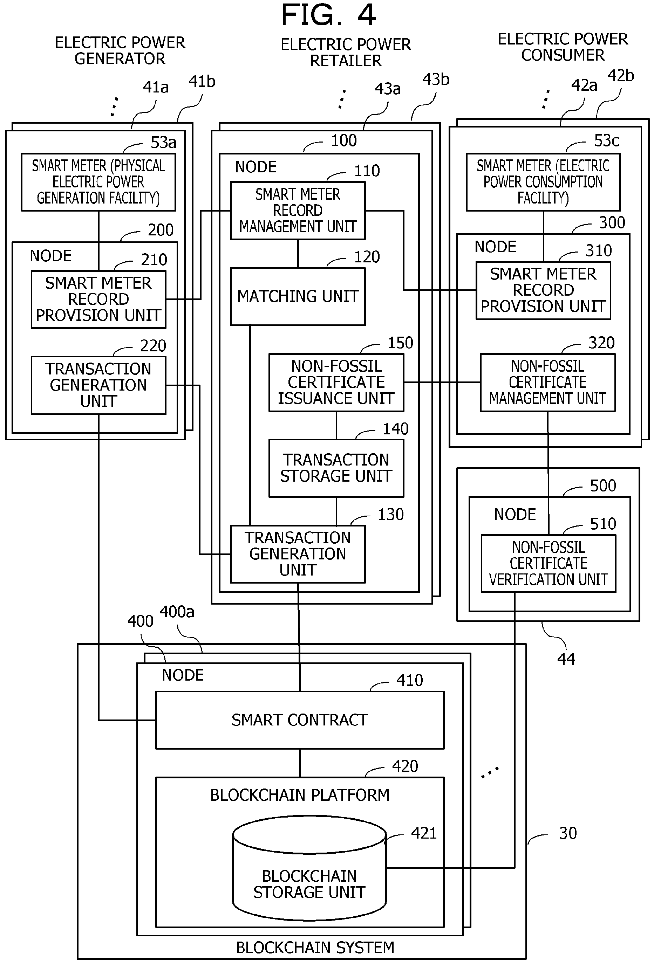

FIG. 4 is a block diagram illustrating an example of the function of each node. The node 200 of the electric power generator 41a includes a smart meter record provision unit 210 and a transaction generation unit 220.

The smart meter record provision unit 210 periodically acquires a smart meter record indicating a time transition of a generated power amount of the physical electric power generation facility 51a, from the smart meter 53a attached to the physical electric power generation facility 51a (refer to FIG. 2). The smart meter record provision unit 210 transmits the acquired smart meter record to a node of an electric power retailer having a right to sell the electric power generated by the physical electric power generation facility 51a.

In a case where the electric power generator 41a sells the electric power supply right to the electric power retailer, the transaction generation unit 220 generates an electric power supply right transaction record indicating transaction content. The transaction generation unit 220 transmits the generated electric power supply right transaction record to any one of the nodes in the blockchain system 30. Furthermore, the transaction generation unit 220 transmits the generated electric power supply right transaction record to a node of a user (for example, electric power retailer) that operates an electric power facility (for example, virtual electric power generation facility) that is a transfer destination of the electric power supply right.

The node 200a, ... of the electric power generator 41b, ... other than the electric power generator 41a have functions similar to those of the node 200.

The node 300 of the electric power consumer 42a includes a smart meter record provision unit 310 and a non-fossil certificate management unit 320.

The smart meter record provision unit 310 periodically acquires a smart meter record indicating a time transition of consumed power of the electric power consumption facility 52a, from the smart meter 53c attached to the electric power consumption facility 52a (refer to FIG. 2). In a case where the smart meter record provision unit 310 concludes a contract to share electric power from an electric power retailer having an electric power supply right for the electric power consumed by the electric power consumption facility 52a, the smart meter record provision unit 310 transmits the acquired smart meter record to a node of the electric power retailer.

In a case of purchasing a right to sell electric power generated using non-fossil energy, the non-fossil certificate management unit 320 acquires a non-fossil certificate from a distribution source of the electric power. The non-fossil certificate management unit 320 stores the acquired non-fossil certificate in the memory or the storage device. Then, the non-fossil certificate management unit 320 transmits the non-fossil certificate indicating that the electric power generated using the non-fossil energy is consumed, to a third party (for example, non-fossil value verifier 44).

The node 300a, ... (refer to FIG. 2) of the electric power consumer 42b, ... other than the electric power consumer 42a have functions similar to those of the node 300.

The node 100 of the electric power retailer 43a includes a smart meter record management unit 110, a matching unit 120, a transaction generation unit 130, a transaction storage unit 140, and a non-fossil certificate issuance unit 150.

In response to input of information indicating that the electric power retailer 43a has concluded an electric power sharing contract based on an electric power supply right, the smart meter record management unit 110 acquires smart meter records of a physical electric power generation facility corresponding to the electric power supply right and an electric power consumption facility that is an electric power supply destination. The smart meter record management unit 110 stores the acquired smart meter record in the memory 102 or the storage device 103.

The matching unit 120 verifies consistency between an electric power generation record of the physical electric power generation facility corresponding to the electric power supply right and an electric power consumption record of the electric power consumption facility to be targets of the electric power supply contract. In a case where the consistency can be confirmed, the transaction generation unit 130 is instructed to generate an electric power supply right transaction record.

The transaction generation unit 130 generates the electric power supply right transaction record including the total electric power amount commitment indicating a total amount of transacted electric power and the zero-knowledge proof that proves the consistency between the electric power generation record and the electric power consumption record. Then, the transaction generation unit 130 transmits the generated electric power supply right transaction record to any one of the nodes in the blockchain system 30. Furthermore, the transaction generation unit 130 stores the information used to generate the electric power supply right transaction record in the transaction storage unit 140. Moreover, the transaction generation unit 130 transmits the generated electric power supply right transaction record to a node of a user (for example, another electric power retailer) that operates an electric power facility (for example, another virtual electric power generation facility) that is a transfer destination of the electric power supply right.

In a case of receiving the electric power supply right transaction record generated by the another node from the another node, the transaction generation unit 130 stores the received electric power supply right transaction record in the transaction storage unit 140.

The transaction storage unit 140 stores the electric power supply right transaction record generated by the transaction generation unit 130. Furthermore, the transaction storage unit 140 stores the electric power supply right transaction record transmitted from the another node to the node 100 (electric power supply right transaction record in which virtual electric power generation facility corresponding to node 100 is set as transfer destination of electric power supply right).

The non-fossil certificate issuance unit 150 issues a non-fossil certificate in response to a request from an electric power consumer that is a sales destination of the electric power supply right of the electric power generated using non-fossil energy. For example, the non-fossil certificate issuance unit 150 generates the non-fossil certificate based on the electric power supply right transaction record stored in the transaction storage unit 140. Then, the non-fossil certificate issuance unit 150 transmits the generated non-fossil certificate to a node of the electric power consumer that has requested the issuance.

The node 100a, ... (refer to FIG. 2) of the electric power retailer 43b, ... other than the electric power retailer 43a have functions similar to those of the node 100.

The node 400 included in the blockchain system 30 includes a smart contract 410 and a blockchain platform 420.

The smart contract 410 automatically executes a transaction contract using a blockchain. For example, when receiving the electric power supply right transaction record, the smart contract 410 verifies whether or not a preset transaction contract condition is satisfied, based on transaction content indicated in the transaction record. Then, in a case where the transaction contract condition is satisfied, the smart contract 410 executes processing for storing the electric power supply right transaction record in the blockchain platform 420.

The blockchain platform 420 manages a ledger of the transaction of the electric power supply right using a mechanism of the blockchain, in cooperation with the other nodes 400a, ... in the blockchain system 30. For example, the blockchain platform 420 adds a block including the electric power supply right transaction record received from the smart contract 410 as a new block of the blockchain. In a case of adding the block to the blockchain, the blockchain platform 420 transmits the blockchain to the other nodes 400a, ... included in the blockchain system 30 and distributedly manages the blockchain.

A blockchain storage unit 421 stores the blockchain indicating the transaction of the electric power supply right. For example, in the blockchain storage unit 421, the blockchain updated by the smart contract 410 or the other nodes 400a, ... included in the blockchain system 30 is stored.

The node 400a, ... other than the node 400 included in the blockchain system 30 also have the similar configuration to the node 400.

Note that, a line coupling between the individual elements illustrated in FIG. 4 indicates a part of a communication path, and a communication path other than the illustrated communication path may also be set. For example, the blockchain managed by the blockchain system 30 is public information, and can be referred from any node outside the blockchain system 30. Furthermore, the function of each element in each node illustrated in FIG. 4 can be implemented, for example, by causing the computer to execute a program module corresponding to the element.

### <Outline of Transaction of Electric Power Supply Right>

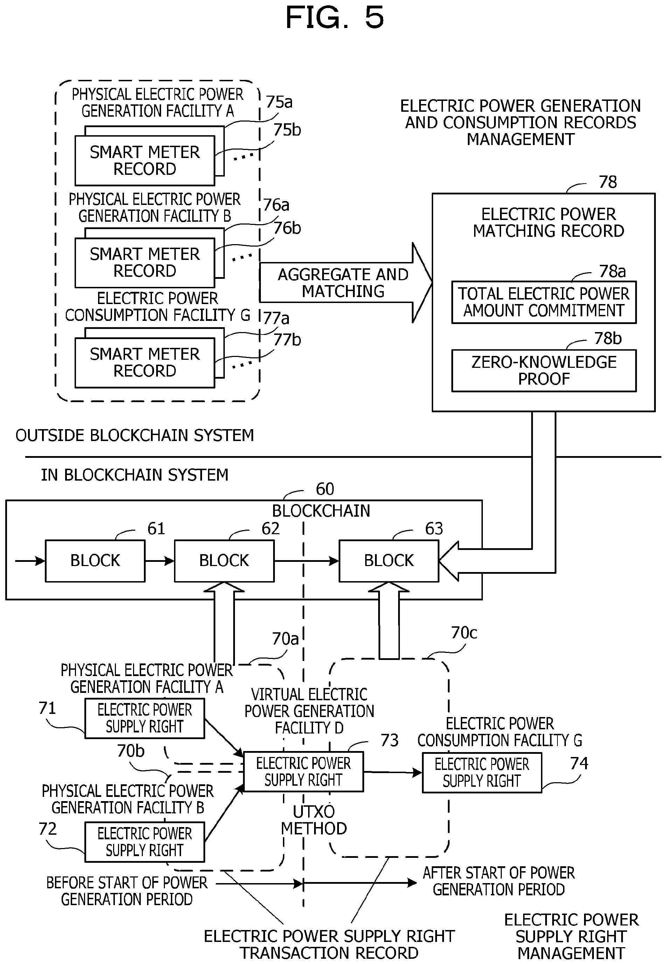

FIG. 5 is a diagram illustrating an outline of a transaction of an electric power supply right. As illustrated in FIG. 5, the transaction of the electric power supply right is managed in a blockchain 60. On the other hand, the electric power generation record and the electric power consumption record are managed outside the blockchain 60.

Among requirements required for the electric power supply right described above, the decentralization can be achieved by using the blockchain 60. The traceability and the double counting prevention can be achieved by managing the electric power supply rights using the unspent transaction output (UTXO) system in the blockchain 60.

The UTXO method calculates a total amount of a right (for example, electric power supply right) of a user by summing unused transactions of the user (for example, electric power retailer). When the UTXO method is adopted, in an electric power supply right transaction record representing transfer of an electric power supply right, the electric power supply right of the user who is a transfer source is set as input. An electric power supply right to be transferred is set as output of the electric power supply right transaction record. An electric power supply right, among electric power supply rights designated in the output for a user, that is not used as input of another electric power supply right transaction record represents an electric power supply right that is not transferred from the user to another user (owned by oneself).

In the UTXO method, it is not possible to transfer the same resource to a plurality of different parties. Therefore, with the transaction of the electric power supply right using the UTXO method, it is possible to prevent double counting of the transaction of the electric power supply right. Furthermore, in the UTXO method, a transferor and an assignee of the electric power supply right are indicated in the electric power supply right transaction record in input and output formats. As a result, a history of the transaction of the electric power supply right can be correctly tracked (traceability requirement is satisfied).

The storage cost requirement is achieved by registering an electric power matching record 78 obtained by aggregating smart meter records 75a, 75b, ..., 76a, 76b, ..., 77a, 77b, ... in the blockchain 60. The scalability requirement can be achieved by matching the electric power generation record of the physical electric power generation facility corresponding to the electric power supply right to be transacted and the electric power consumption record of the assignee electric power consumption facility outside the blockchain 60.

Moreover, each node outside the blockchain system 30 confidentially manages the smart meter record. Then, each node outside the blockchain system 30 conceals a total electric power supply amount using a commitment scheme and proves validity of a matching result based on a zero-knowledge proof 78b. As a result, the privacy protection is achieved.

In FIG. 5, an example is illustrated in a case where an electric power retailer acquires electric power supply rights of a physical electric power generation facility A and a physical electric power generation facility B and the electric power retailer transfers the electric power supply rights to an electric power consumer having an electric power consumption facility G. Note that, in the system, it is assumed that the electric power retailer operates a virtual electric power generation facility D. An outline of such a transaction will be described below.

In the blockchain system 30, the ledger used to manage the electric power supply right is generated by the blockchain 60. Since electric power supply is managed in a long period such as one month in many cases, a data amount does not become enormous. Therefore, all electric power supply right transaction records regarding the transaction of the electric power supply right are managed on the blockchain 60.

For example, it is assumed that, in a block 61, it be recorded that an electric power generator having the physical electric power generation facility A has an electric power supply right 71 and an electric power generator having the physical electric power generation facility B has an electric power supply right 72. In the electric power supply rights 71 and 72, electric power to be generated by the physical electric power generation facility and an electric power generation period are set.

A electric power retailer having the virtual electric power generation facility D concludes a transfer contract of the electric power supply rights 71 and 72 with each electric power generator. This transfer contract is concluded, for example, before start of the power generation period set to the electric power supply rights 71 and 72. When the transfer contract is concluded, the electric power generator generates electric power supply right transaction records 70a and 70b indicating transfer content of the electric power supply rights 71 and 72 using an own node of the electric power generator. Then, the nodes of the respective electric power generators transmit the electric power supply right transaction records 70a and 70b to the node in the blockchain system 30.

In the blockchain system 30, after it is confirmed that the content of the electric power supply right transaction records 70a and 70b is valid, a new block 62 including the electric power supply right transaction records 70a and 70b is registered in the blockchain 60. The block 62 indicates that the electric power retailer that operates the virtual electric power generation facility D has an electric power supply right 73 containing the two electric power supply rights 71 and 72. Furthermore, the block 62 includes a hash value of the previous block 61. As a result, falsification of the transaction history is prevented.

Note that, in the blockchain system 30, in order to prevent double counting of the electric power generation record, the transaction of the electric power supply right is managed with the UTXO method so that an electric power supply right at each time of each physical electric power generation facility is not assigned to a plurality of different electric power consumption facilities.

Next, the electric power retailer that operates the virtual electric power generation facility D concludes electric power supply based on the electric power supply right 73 with the electric power consumer having the electric power consumption facility G. When the power generation period set to the electric power supply rights 71 and 72 ends, the electric power retailer that operates the virtual electric power generation facility D collects the smart meter records 75a, 75b, ..., 76a, 76b, ..., 77a, 77b, ... with the own node. Hereinafter, it is assumed that the electric power retailer 43a (refer to FIG. 2) operate the virtual electric power generation facility D and the electric power retailer 43a transact the electric power supply right using the node 100.

In the smart meter records 75a, 75b, ..., 76a, 76b, ..., 77a, 77b, ..., electric power generation and electric power consumption records at certain time (for example, 30 minutes) intervals for a power generation period indicated in the electric power supply right 73 to be transferred are indicated. The node 100 of the electric power retailer 43a calculates an electric power generation amount (electric power generation record) at certain time intervals in the power generation period to be a transaction target, based on the smart meter records 75a, 75b, ..., 76a, 76b, ... of the physical electric power generation facility A and the physical electric power generation facility B. Furthermore, the node 100 calculates an electric power consumption amount (electric power consumption record) at certain time intervals in the power generation period to be the transaction target, based on the smart meter records 77a, 77b, ... of the electric power consumption facility G.

Next, the node 100 generates an electric power matching record 78 indicating that matching between the electric power generation record and the electric power consumption record is correct and transmits the electric power matching record 78 to the blockchain system 30. In order to conceal the total electric power supply amount, a commitment (total electric power amount commitment 78a) regarding the total electric power supply amount is included in the electric power matching record 78. Furthermore, the zero-knowledge proof 78b that proves consistency between the electric power generation records of the physical electric power generation facilities A and B corresponding to the transferred electric power supply right 73 and the electric power consumption record of the electric power consumption facility G that is the transfer destination, is included in the electric power matching record 78.

The blockchain system 30 that receives the electric power matching record 78 registers a block 63 including the electric power matching record 78 in the blockchain 60. At this time, the blockchain system 30 associates the electric power matching record 78 with a UTXO corresponding to an electric power supply right 74 to the electric power consumption facility G indicated in an electric power supply right transaction record 70c regarding transfer of the electric power supply right 73 to the electric power consumer.

In this way, instead of a large amount of smart meter records in 30-minute units, the aggregated electric power matching record 78 is recorded in the blockchain 60. As a result, the problems of the scalability and the storage cost of the blockchain 60 are solved. At this time, in order to prove that internal data and external data of the blockchain 60 are consistent without disclosing the smart meter record, the zero-knowledge proof 78b is used. As a result, a concealed state of the electric power generation record of the electric power generator and the electric power consumption record of the electric power consumer is maintained, and the privacy problem is solved.

Note that, when the electric power matching record 78 is recorded in the blockchain 60, the smart contract 410 verifies the zero-knowledge proof. Therefore, it is possible to prevent an invalid electric power matching record from being recorded in the blockchain 60.

### <Application of UTXO Method to Transaction of Electric Power Supply Right>

Next, a transaction of an electric power supply right with the UTXO method will be specifically described.

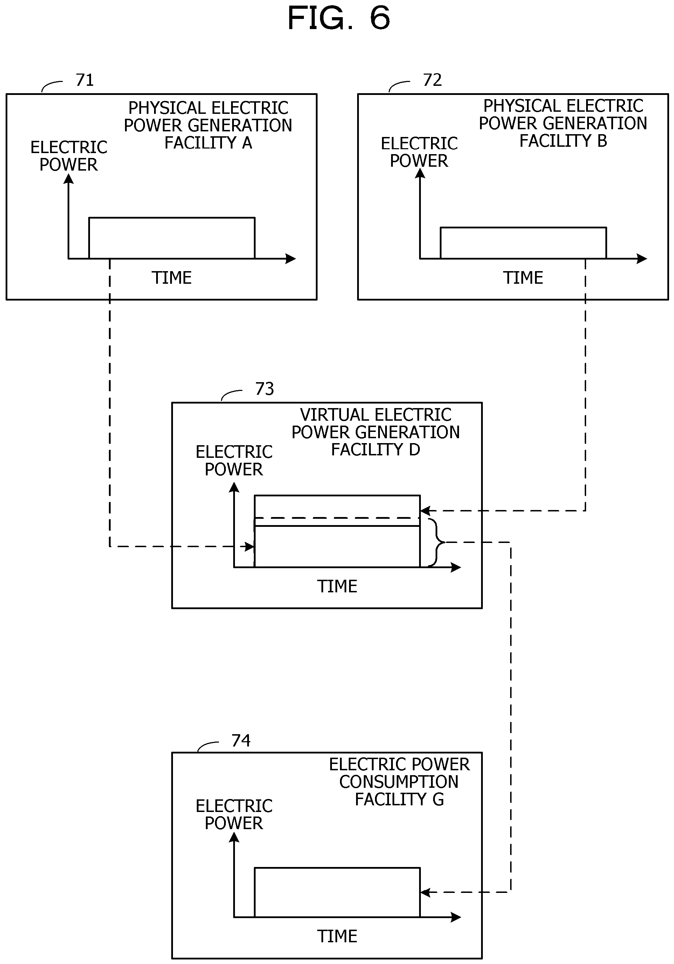

FIG. 6 is a diagram illustrating an example of the transaction of the electric power supply right. The electric power supply rights 71 to 74 indicate electric power that can be supplied, based on a power generation period having a right to supply electric power and electric power to be generated in that period. When a graph is indicated in which the horizontal axis indicates time and the vertical axis indicates electric power, electric power that can be supplied with each of the electric power supply rights 71 to 74 is expressed as a rectangle. Electric power that can be supplied by the virtual electric power generation facility D is a total of the electric power that can be supplied by each of the physical electric power generation facility A and the physical electric power generation facility B.

In a case where a part of electric power that can be generated with the electric power supply right 73 is transferred to the electric power consumer that operates the electric power consumption facility G, electric power within a rectangular range indicating the electric power that can be supplied by the virtual electric power generation facility D is transferred to the electric power consumption facility G as the electric power supply right 74.

In this way, in the blockchain system 30, the electric power supply right to be transacted is specified based on two-dimensional information based on the time and the electric power and is managed using the UTXO method. Since the electric power supply right is managed in a long period such as one month, in many cases. Therefore, a data amount does not become enormous. Therefore, all the electric power supply right transaction records can be managed on the blockchain 60.

Since the UTXO method is adopted, the blockchain system 30 is not allowed to transfer the same resource (electric power in rectangular region represented by period and electric power within period) to a plurality of different users. Therefore, the electric power supply at each time by each physical electric power generation facility is not assigned to the plurality of different electric power consumption facilities, and double counting of the electric power generation record can be prevented. In the blockchain 60, the electric power matching record 78 is associated with the electric power supply right transaction record indicating the electric power supply right 74 transferred for power consumption of the electric power consumption facility G.

### <Association between Electric Power Generation Record and Electric Power Consumption Record with Electric Power Supply Right>

The electric power supply right transaction record is a transaction indicating that the electric power supplying right is transferred, and is different from an actual power supplying route. For example, the virtual electric power generation facility can resell a right to supply electric power to another power company. This reselling can be theoretically repeated an infinite number of times. Finally, by registering an electric power supply transaction record for transferring an electric power supply right from a virtual electric power generation facility to an electric power consumption facility, a flow of the transfer ends.

Therefore, an end of the graph indicating the relationship of the UTXO is always the electric power consumption facility. Furthermore, in the graph, one immediately before the electric power consumption facility is the virtual electric power generation facility that has finally supplied electric power to the electric power consumption facility.

Since the electric power supply right transaction record means the transfer of the electric power supply right, the electric power supply right transaction record is recorded in the blockchain before an actual power generation time in principle. However, both of the electric power generation record and the electric power consumption record are uncertain amounts that are uncertain before that time. Therefore, the electric power supply right transaction record indicating the transfer of the electric power supply right to the electric power consumption facility can be registered in the blockchain 60 after the total electric power supply period to be a target of the right. Note that, by registering the electric power supply right transaction record indicating the transfer of the electric power supply right to the electric power consumption facility before the total electric power supply period and retransferring the electric power supply right after the total electric power supply period has elapsed, an electric power amount consumed with the electric power supply right may be adjusted afterwards.

The node 100 of the electric power retailer that operates the virtual electric power generation facility for transferring the electric power supply right to the electric power consumption facility generates the electric power matching record 78 that means the matching result of the electric power generation record and the electric power consumption record, after the total electric power supply period of the transacted electric power supply right has elapsed. Then, the node 100 registers the generated electric power matching record 78 in the blockchain 60, in association with the electric power supply right transaction record indicating the transfer of the electric power supply right to the electric power consumption facility.

Note that the zero-knowledge proof 78b is included in the electric power matching record 78, and the zero-knowledge proof 78b is verified by the smart contract 410. As a result, it is not possible to associate the electric power matching record 78 with only an appropriate UTXO of an appropriate electric power consumption facility.

Note that, in the example in FIG. 6, a part of the electric power of each of the electric power supply rights 71 and 72 is the electric power of the electric power supply right 74. In a case of the UTXO method, in a case where a part of the electric power supply rights 71 and 72 is transferred, the electric power supply right for the remaining electric power after the transfer remains as a right of a transfer source based on the electric power supply right transaction record to be transferred to oneself.

### transaction Example of Electric Power Supply Right>

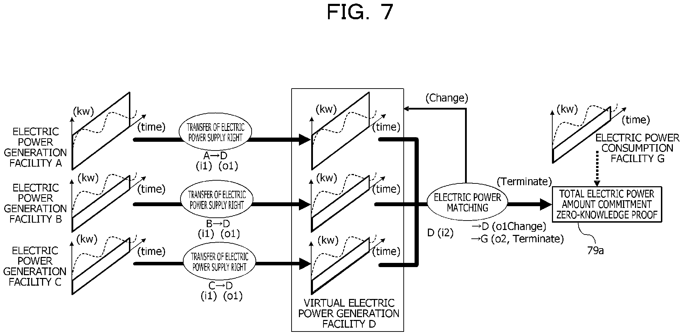

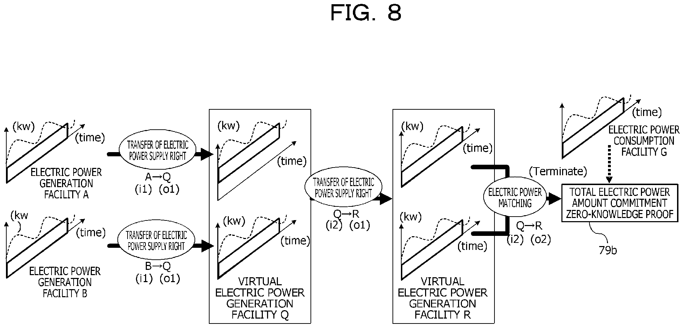

Hereinafter, a transaction example of an electric power supply right will be described with reference to FIGs. 7 and 8.

FIG. 7 is a diagram illustrating a first example of the transaction of the electric power supply right. In the example in FIG. 7, an electric power supply right is transferred from each of the physical electric power generation facilities A to C to the virtual electric power generation facility D. Then, an electric power supply contract to the electric power consumption facility G is concluded, based on the electric power supply right of the virtual electric power generation facility D. At this time, the electric power generation records of the physical electric power generation facilities A to C greatly exceed the electric power consumption record of the electric power consumption facility G. In this case, an electric power supply right transaction record for transferring an extra electric power supply right from the virtual electric power generation facility D to oneself (corresponding to change of virtual currency) and an electric power supply right transaction record indicating electric power supply from the virtual electric power generation facility D to the electric power consumption facility G are generated.

An electric power matching record 79a is given to the electric power supply right transaction record indicating the electric power supply from the virtual electric power generation facility D to the electric power consumption facility G. Then, the electric power supply right transaction record including the electric power matching record 79a is registered in the blockchain 60.

In FIG. 7, a facility on the left side in the transaction of the electric power supply right is an input target of the UTXO, and a facility on the right side is an output target of the UTXO. Only a node of an electric power retailer that operates a virtual electric power generation facility that owns an electric power supply right corresponding to the output of the electric power supply right transaction record after the power generation can perform electric power matching in a period corresponding to the electric power supply right. That is, the node of the electric power retailer performs electricity power amount matching for a part of the UTXO designated by the input of the electric power supply right transaction record. Then, the node of the electric power retailer can add a dataset regarding the electric power matching to an output field of the electric power supply right transaction record. As a result, the "part of the UTXO" disappears through electric power matching, and the electric power supply right is terminated (hereinafter, it is not possible to transfer electric power supply right to anyone).

FIG. 8 is a diagram illustrating a second example of the transaction of the electric power supply right. In the example in FIG. 8, an electric power supply right is transferred from each of the physical electric power generation facilities A to C to a virtual electric power generation facility Q. Moreover, the electric power supply right is transferred from the virtual electric power generation facility Q to a virtual electric power generation facility R. Then, an electric power supply contract to the electric power consumption facility G is concluded, based on the electric power supply right of the virtual electric power generation facility R.

An electric power matching record 79b is given to the electric power supply right transaction record for transferring the electric power supply right from the virtual electric power generation facility R to the electric power consumption facility G. Then, the electric power supply right transaction record including the electric power matching record 79b is registered in the blockchain 60. Note that, the electric power supply right transaction record indicating the electric power supply to the electric power consumption facility G is terminated, and thereafter, it is not possible to transfer the electric power supply right.

As illustrated in FIG. 8, the electric power supply right may be transferred to the electric power consumption facility via the plurality of virtual electric power generation facilities. The number of virtual electric power generation facilities interposed between the physical electric power generation facility and the electric power consumption facility may be equal to or more than three.

The node on the side of transferring the electric power supply right writes the electric power supply right transaction record into the blockchain, and at the same time, transmits the content of the electric power supply right transaction record to the node of the party to which the electric power supply right is transferred. Therefore, the node of the electric power retailer locally holds and manages all data of the electric power supply right transaction record of which a transfer destination is the own node.

### <Electric Power Supply Transaction Record>

A data structure of the power supply right transaction record differs according to a type of input and output. For example, the type of the input is indicated adjacent to a name of a transfer source of the electric power supply right in FIGs. 7 and 8, and the type of the output is indicated adjacent to a name of a transfer destination.

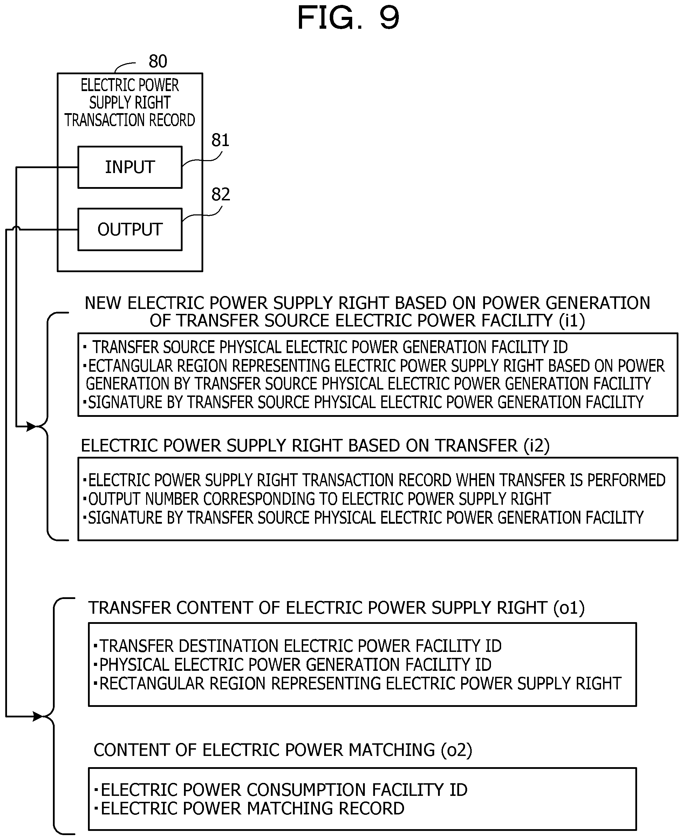

FIG. 9 is a diagram illustrating an example of the data structure of the power supply right transaction record. Types of input 81 of an electric power supply right transaction record 80 include input (i1) of a new electric power supply right based on power generation of a transfer source electric power facility and input (i2) of an electric power supply right based on transfer. The new electric power supply right is an electric power supply right issued by a node of an electric power generator that operates a physical electric power generation facility. The electric power supply right based on the transfer is an electric power supply right issued by a node of an electric power retailer that operates a virtual electric power generation facility. Content of the input 81 for each type of the input 81 is as follows.

### [Input (i1) of New Electric Power Supply Right Based on Power Generation by Transfer Source Electric Power Facility]

A power supply right transaction record of the new electric power supply right includes a physical electric power generation facility ID of a transfer source, a rectangular region representing an electric power supply right based on power generation by the transfer source physical electric power generation facility (power generation period * electric power), and an electronic signature by the transfer source physical electric power generation facility.

### [Input (i2) of Electric Power Supply Right Based on Transfer]

The electric power supply right transaction record of the electric power supply right based on the transfer includes a power supply right transaction record when the electric power supply right is transferred, an output number of the electric power supply right in the power supply right transaction record, and the electronic signature by the transfer source electric power facility.

Types of output 82 of the electric power supply right transaction record 80 include output (o1) in a case where an electric power supply right is transferred to a facility other than the electric power consumption facility (for example, virtual electric power generation facility) and output (o2) in a case where the electric power supply right is transferred to the electric power consumption facility. A case where the electric power supply right is transferred to the electric power consumption facility is a case where the electric power supply right is terminated. Content of the output 82 for each type of the output 82 is as follows.

### [Output (o1) in A Case Where Electric Power Supply Right Is Transferred to Facility Other Than Electric Power Consumption Facility]

A power supply right transaction record that transfers an electric power supply right to a facility other than the electric power consumption facility includes a transfer destination electric power facility ID, a physical electric power generation facility ID, and a rectangular region representing the electric power supply right (power generation period * electric power).

### [Output (o2) in A Case Where Electric Power Supply Right Is Transferred to Electric Power Consumption Facility]

A power supply right transaction record that transfers an electric power supply right to the electric power consumption facility includes an electric power consumption facility ID and an electric power matching record. The electric power matching record is information generated based on a smart meter record.

The content of the electric power supply transaction record is as described above.

### <Smart Contract>

Validity of the content of the electric power supply transaction record recorded in the blockchain 60 is ensured by the smart contract 410 in the blockchain system 30. For example, the smart contract 410 controls each electric power supply right transaction record to comply with the principle of the UTXO method (generating output within range of total amount of input). As a result, double counting of the electric power supply right can be prevented. Verification content of the smart contract will be described below.

### [Input Value to Smart Contract]

An electric power supply right transaction record

### [Verification Items of Smart Contract]

verify validity of an electronic signature of input of the electric power supply right transaction record

verify validity of a value range (verification of following four items)

A transfer destination electric power facility ID signed by a certificate authority is registered in a blockchain.

A physical electric power generation facility ID signed by the certificate authority is registered in the blockchain.

An electric power consumption facility ID signed by the certificate authority is registered in the blockchain (only in a case where electric power supply right is terminated).

All rectangular regions representing the electric power supply right exist in a range of normal values.

verify that double counting of the electric power supply right does not occur (verify following three items)

Each rectangular region representing an electric power supply right transferred with output of an electric power supply right transaction record is included in a sum set of all rectangular regions representing electric power supply rights of input of the electric power supply right transaction record.

There is no pair of the rectangular regions, representing the electric power supply rights of the outputs of the two different electric power supply right transaction records, that overlap.

No new electric power supply right having the same physical electric power generation facility as the new electric power supply right of the input of each electric power supply right transaction record and of which a rectangular region overlaps is recorded in the blockchain 60 (only in a case where transfer source is physical electric power generation facility).

verify a matching validity proof of an electric power matching record (only in a case where electric power supply right is terminated)

The verification content of the smart contract 410 is as described above. By verifying the matching validity proof by the smart contract 410, the validity of the transaction can be ensured even if the content of the smart meter record indicating the electric power generation record or the electric power consumption record is concealed.

### <Electric Power Matching>

The electric power matching is to verify consistency between the electric power generation record in the total electric power supply period of the physical electric power generation facility corresponding to the electric power supply right to be transferred and the electric power consumption record in the total electric power supply period of the electric power facility that is operated by the transfer destination electric power consumer. The electric power generation record and the electric power consumption record are determined based on the smart meter record. Then, a result of the electric power matching is set to the electric power matching record.

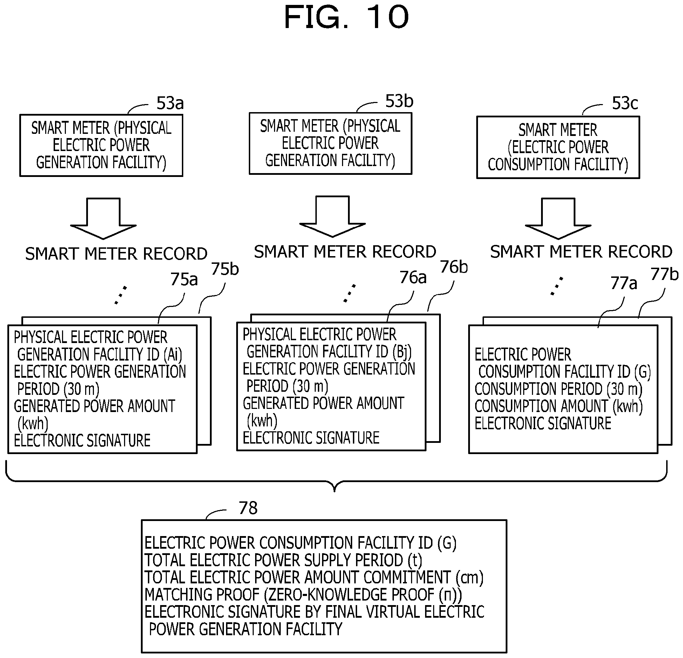

FIG. 10 is a diagram illustrating an example of information included in the smart meter record and the electric power matching record. For example, the smart meter 53a attached to the physical electric power generation facility periodically generates the smart meter records 75a, 75b, ... including a physical electric power generation facility ID used to identify the physical electric power generation facility to which the smart meter 53a is attached, a power generation period, a generated power amount, and an electronic signature. A generation cycle of the smart meter records 75a, 75b, ... is, for example, 30 minutes. In that case, a length of the power generation period indicated in the smart meter records 75a, 75b, ... is also 30 minutes. The generated power amount is an electric power amount generated in the power generation period. The electronic signature is an electronic signature of a physical electric power generation facility indicating that no error is included in the content of the smart meter record. Another smart meter 53b attached to the physical electric power generation facility generates the smart meter records 76a, 76b, ... having the similar content.

The smart meter 53c attached to the electric power consumption facility periodically generates the smart meter records 77a, 77b, ... including an electric power consumption facility ID used to identify the electric power consumption facility to which the smart meter 53c is attached, a consumption period, a consumption amount, and an electronic signature. A generation cycle of the smart meter records 77a, 77b, ... is, for example, 30 minutes. In that case, a length of the consumption period indicated in the smart meter records 77a, 77b, ... is also 30 minutes. The consumption amount is an electric power amount consumed in the consumption period. The electronic signature is an electronic signature of the electric power consumption facility indicating that no error is included in the content of the smart meter record.

Here, it is assumed that the smart meters 53a to 53c be reliable. In other words, it is assumed that all pieces of data including the generated power amount and the electric power consumption amount recorded in the smart meter records to which the smart meters 53a to 53c added the electronic signatures be reliable. Note that the electric power facility ID (including physical electric power facility ID and electric power consumption facility ID) is a random value having a certain bit width and is assumed to have pseudonym.

By aggregating the smart meter records 75a, 75b, ... 76a, 76b, ... of the physical electric power generation facilities and the smart meter records 77a, 77b, ... of the electric power consumption facilities, the electric power matching record 78 is generated. The electric power matching record 78 includes the electric power consumption facility ID, the total electric power supply period, the total electric power amount commitment, the matching proof, and an electronic signature by a final virtual electric power generation facility. The matching proof is information proving that the electric power matching is correctly performed. For the matching proof, for example, the zero-knowledge proof is used.

The node that generates the electric power matching record 78 performs the electric power matching. The electric power matching is processing for comparing the electric power generation record of the physical electric power generation facility and the electric power consumption record of the electric power consumption facility and confirming that the electric power corresponding to the electric power consumption record can be generated by the physical electric power generation facility corresponding to the electric power supply right to be a transaction target.

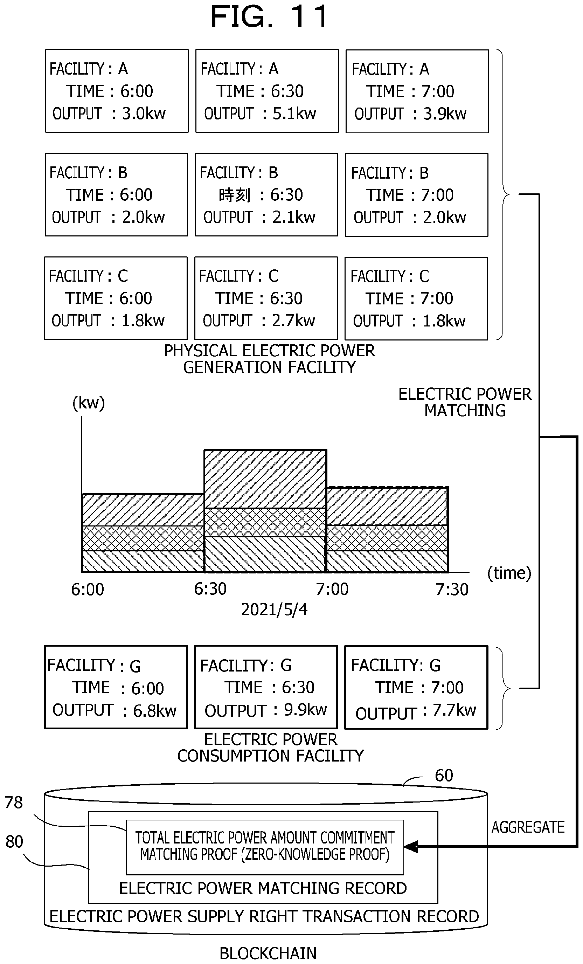

FIG. 11 is a diagram illustrating an example of the electric power matching. In FIG. 11, an example of electric power matching in a case where electric power supply rights of electric power generated by the physical electric power generation facilities A to C in a total electric power supply period are transferred to the electric power consumption facility G is illustrated. A predetermined period from 6:00 on May 4, 2021 is the total electric power supply period. The electric power matching is performed in a power generation period unit (30 minutes in example in FIG. 11) in the smart meter record.

For example, the electric power consumption record of the electric power consumption facility G in a period from 6:00 to 6:30 (power consumption in 30 minutes) is 6.8 kw. The electric power generation record of the physical electric power generation facility A in the same period is 3.0 kw, the electric power generation record of the physical electric power generation facility B is 2.0 kw, and the electric power generation record of the physical electric power generation facility C is 1.8 kw. The node that performs the electric power matching confirms that the sum of the electric power generation records of the physical electric power generation facilities is equal to the electric power consumption record of the electric power consumption facility or that the electric power generation record is equal to or more than the electric power consumption record. The sum of the electric power generation records in the period from 6:00 to 6:30 is 6.8 kw, and electric power for the electric power consumption record of the electric power consumption facility G is generated by the physical electric power generation facilities.

The electric power consumption record of the electric power consumption facility G in a period from 6:30 to 7:00 is 9.9 kw. The electric power generation record of the physical electric power generation facility A in the same period is 5.1 kw, the electric power generation record of the physical electric power generation facility B is 2.1 kw, and the electric power generation record of the physical electric power generation facility C is 2.7 kw. The sum of the electric power generation records in the period from 6:30 to 7:00 is 9.9 kw, and electric power for the electric power consumption record of the electric power consumption facility G is generated by the physical electric power generation facilities.

The electric power consumption record of the electric power consumption facility G in a period from 7:00 to 7:30 is 7.7 kw. The electric power generation record of the physical electric power generation facility A in the same period is 3.9 kw, the electric power generation record of the physical electric power generation facility B is 2.0 kw, and the electric power generation record of the physical electric power generation facility C is 1.8 kw. The sum of the electric power generation records in the period from 7:00 to 7:30 is 7.7 kw, and electric power for the electric power consumption record of the electric power consumption facility G is generated by the physical electric power generation facilities.

When it can be confirmed that the electric power for the electric power consumption record of the electric power consumption facility G is generated by the physical electric power generation facilities for all the periods in 30-minute units in the total electric power supply period, the node that performs the electric power matching generates the electric power matching record 78. Moreover, the node generates the electric power supply right transaction record 80 including the generated electric power matching record in the output. Then, the generated electric power supply right transaction record 80 is registered in the blockchain 60.

In this way, the node of the electric power retailer that sells electric power matches electric power supplied by a physical electric power generation facility and electric power consumed by an electric power consumption facility in 30-minute units. However, all of the two million smart meter records cannot be recorded in the blockchain 60. Therefore, the node of the electric power retailer aggregates the smart meter records of the related electric power generation records and electric power consumption records and generates the electric power matching record for each electric power matching, and records only the electric power matching record in the blockchain 60. At this time, the node of the electric power retailer saves all data related to the electric power matching record in a local memory or storage device.

Next, the matching validity proof will be described in detail. The electric power retailer generates the zero-knowledge proof regarding the validity of the electric power matching, using the own node. The specification of the matching validity proof is as follows.

### <Matching Validity Proof>

The matching validity proof is a value used to prove that a predetermined proposition is correct, based on a public input value and a secret input value. The public input values are as follows.

### [Public Input Value]

set of physical electric power generation facility IDs
electric power consumption facility ID
verification keys of electronic signatures of physical electric power generation facility and electric power consumption facility
total electric power supply period
total electric power amount commitment

The above values are the public input values. The total electric power amount commitment is a function value of a commitment function (COMMr (x)) based on the commitment scheme. The reference r indicates a commitment random number, and the reference x indicates a total electric power consumption amount. The commitment function generates a different value when a value of the commitment random number is different. Furthermore, there is only one type of combination of the commitment random number and the total electric power consumption amount used to generate one total electric power amount commitment.

The secret input values are as follows.

### [Secret Input Value]

all smart meter records in total electric power supply periods of all physical electric power generation facilities corresponding to electric power supply right to be transferred (including physical electric power generation facility ID, power generation period, generated power amount, and electronic signature of physical electric power generation facility)
all smart meter records in total electric power supply period of electric power consumption facility to be transfer destination of electric power supply right (including electric power consumption facility ID, power generation period, electric power consumption amount, and electronic signature of electric power consumption facility).
commitment random number

The above values are the secret input values. A proposition of the matching validity proof is to satisfy all the following propositions at the same time.

### [Propositions]

physical electric power generation facility IDs of all smart meter records of all physical electric power generation facilities are correct.
electric power consumption facility IDs of all smart meter records of electric power consumption facilities are correct.
power generation periods of smart meter records obtained from all physical electric power generation facilities corresponding to electric power supply right to be transferred cover total electric power supply period.
consumption period of smart meter record of electric power consumption facility to be transfer destination of electric power supply right covers total electric power supply period.
electronic signatures of all smart meter records of all physical electric power generation facilities are correct.
electronic signatures of all smart meter records of electric power consumption facility are correct.
sum of generated power amounts (electric power generation record) indicated by smart meter record of electric power consumption facility for all unit periods in 30 minute units in total electric power supply period is equal to power consumption amount (electric power consumption record) indicated by smart meter record of electric power consumption facility in same unit period.
commitment function value when sum of electric power consumption amounts of all smart meter records of electric power consumption facility is used as variable of the commitment function is equal to total electric power amount commitment. In other words, when the sum of the electric power consumption amounts of all the smart meter records of the electric power consumption facility is assumed as Σ and the total electric power amount commitment is assumed as cm, COMMe (Σ) = cm.

The above propositions are the propositions of the matching validity proof. Whether the physical electric power generation facility ID or the electric power consumption facility ID is correct can be confirmed by acquiring a signature used to prove a facility ID from an authority certificate that proves a facility ID, for example. Furthermore, whether the electronic signature of the smart meter record is correct can be confirmed by comparing a hash value based on a predetermined hash function of the smart meter record and a value obtained by decrypting the electronic signature with a public key of the physical electric power generation facility, for example. If the values match as a result of the comparison, it can be determined that the electronic signature is correct.

The zero-knowledge proof for proving the above propositions is the matching validity proof. As such a zero-knowledge proof, for example, a non-interactive type zero-knowledge proof is used. The non-interactive type zero-knowledge proof includes Zero-Knowledge Succinct Non-Interactive ARgument of Knowledge (zk-SNARK).

In a case where the zk-SNARK is used, a common reference string (CRS) is generated as presetting by a reliable third party organization. The transaction generation unit 130 performs predetermined calculation based on the CRS, a proposition, and an evidence indicating that the proposition is true, and generates a zero-knowledge proof Π. The smart contract 410 of the blockchain system 30 performs verification calculation by using the CRS, the proposition, and the zero-knowledge proof Π, and determines that the proposition is proved to be true when a result is one.

The non-interactive type zero-knowledge proof includes, for example, Zero-Knowledge Succinct Transparent ARgument of Knowledge (zk-STARK), in addition to the zk-SNARK. If the zk-STARK is used, the reliable third party organization is not needed.

The matching validity proof is verified by the smart contract 410. The smart contract 410 performs the following verification based on the electric power matching record, for example.
validity of electronic signature by virtual electric power generation facility that supplies electric power to electric power consumption facility.
validity of matching target UTXO (to indicate existing UTXO).
validity of total electric power supply period (not abnormal value, overlap with period of another electric power matching record does not occur (double counting of electric power matching does not occur)).
validity of matching validity proof (proposition of zero-knowledge proof is true).

In a case where it can be verified that all the above content is correct, the smart contract 410 registers the electric power supply right transaction record including the electric power matching record in the blockchain 60.

### <Issuance and Verification of Non-Fossil Certificate>

Here, in a case where an electric power consumer purchases an electric power supply right of electric power generated using the non-fossil energy and assigns the purchased electric power supply right to the electric power consumed by the own electric power consumption facility, the electric power consumer can receive issuance of a non-fossil certificate from the electric power retailer that is the transfer source of the electric power supply right.

For example, the electric power consumer that desires to prove the non-fossil value requests the electric power retailer that has supplied electric power to issue the non-fossil certificate. The node of the electric power retailer generates the non-fossil certificate including content of the electric power supply right transaction record when the electric power supply right is transferred to the electric power retailer and content of the electric power supply right transaction record when the electric power supply right is terminated. Then, the node of the electric power retailer transmits the generated non-fossil certificate to the node of the electric power consumer (issuance of non-fossil certificate).

The node of the electric power consumer that has received the non-fossil certificate transmits the issued non-fossil certificate to the node 500 of the non-fossil value verifier 44. The node 500 of the non-fossil value verifier 44 acquires the electric power supply right transaction record (commitment and zero-knowledge proof) corresponding to each electric power supply right transaction record included in the non-fossil certificate from the blockchain. Then, the node 500 confirms that the content of the electric power matching is correct (verification of non-fossil certificate) by verifying the zero-knowledge proof.

### <Electric Power Supply Right Transaction and Procedure of Issuance and Verification of Non-Fossil Certificate>

Next, a transaction procedure of an electric power supply right will be described.

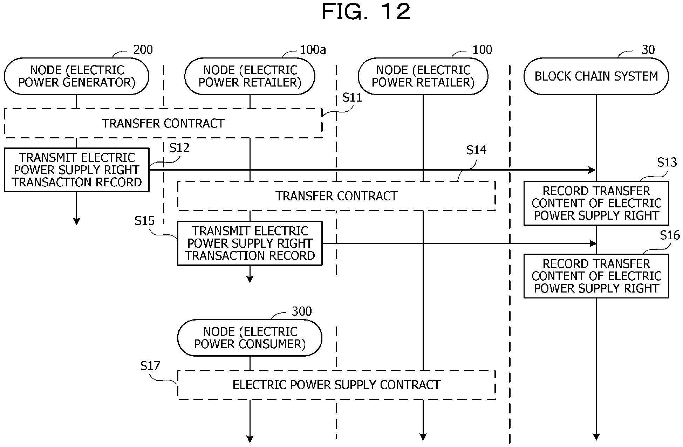

FIG. 12 is a sequence diagram illustrating an example of the processing procedure before start of a total electric power supply period of electric power to be transacted. In the example in FIG. 12, first, a transfer contract of an electric power supply right for electric power generated by the physical electric power generation facility 51a that is operated by the electric power generator 41a between the electric power generator 41a and the electric power retailer 43b (step S11). The transfer contract of the electric power supply right is concluded outside this system (for example, offline). In the transfer contract of the electric power supply right, electric power that can be generated by the physical electric power generation facility 51a and a total electric power supply period (for example, next one month) are determined.

Thereafter, the electric power generator 41a generates an electric power supply right transaction record indicating transfer of the electric power supply right of the electric power generated by the physical electric power generation facility 51a, using the own node 200. Then, the node 200 transmits the generated electric power supply right transaction record to the blockchain system 30 (step S12). It is assumed that this electric power supply right transaction record be received by the node 400 in the blockchain system 30.

The smart contract 410 of the node 400 that receives the electric power supply right transaction record verifies whether or not content of the transfer of the electric power supply right indicated by the received electric power supply right transaction record is correct. Then, the smart contract 410 records the received electric power supply right transaction record in the blockchain 60 only in a case of determining that the content is correct (step S13).

For example, the electric power retailer 43b concludes a contract for transferring the acquired electric power supply right to another electric power retailer 43b (step S14). The transfer contract for re-transferring the electric power supply right is concluded outside this system (for example, offline). After the contract, the electric power retailer 43b that is a transfer source generates an electric power supply right transaction record using the own node 100a. Then, the node 100a transmits the generated electric power supply right transaction record to the blockchain system 30 (step S15). It is assumed that this electric power supply right transaction record be received by the node 400 in the blockchain system 30.

The smart contract 410 of the node 400 that receives the electric power supply right transaction record verifies whether or not content of the transfer of the electric power supply right indicated by the received electric power supply right transaction record is correct. Then, the smart contract 410 records the received electric power supply right transaction record in the blockchain 60 only in a case of determining that the content is correct (step S16). The electric power retailer 43a can re-transfer the electric power supply right that has been transferred to the electric power retailer 43a, another electric power retailer. Such re-transfer of the electric power supply right can be repeated many times.

The electric power consumer 42a that operates the electric power consumption facility 52a concludes a contract for receiving the supply of the electric power from the electric power retailer 43a for a certain period (total electric power supply period) (step S17). This contract is concluded outside this system (for example, offline), for example. Electric power matching according to this contract (termination of electric power supply right transaction record about supplied electric power) is performed after the total electric power supply period.

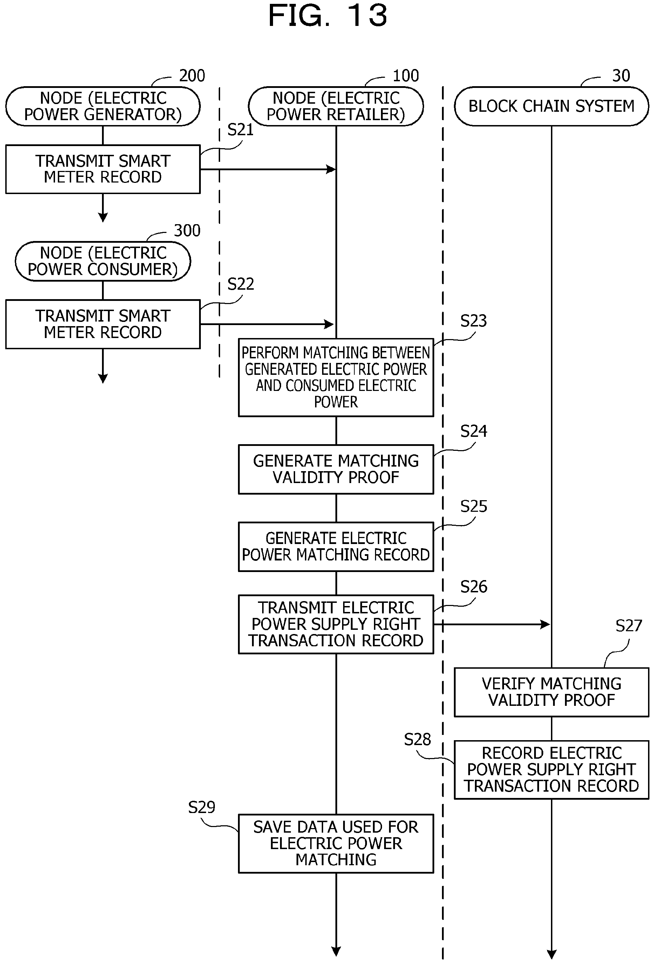

FIG. 13 is a sequence diagram illustrating an example of the processing procedure after the start of the total electric power supply period of the electric power to be transacted. The node 200 of the electric power generator 41a that operates the physical electric power generation facility 51a corresponding to the electric power supply right regarding the electric power supply contract to the electric power consumption facility 52a transmits the smart meter record of the physical electric power generation facility 51a to the node 100 of the electric power retailer 43a (step S21). Furthermore, the node 300 of the electric power consumer 42a that operates the electric power consumption facility 52a transmits the smart meter record of the electric power consumption facility 52a to the node 100 of the electric power retailer 43a (step S22).

The node 100 of the electric power retailer 43a performs matching between the smart meter record of the physical electric power generation facility 51a and the smart meter record of the electric power consumption facility 52a for one month in 30-minute units (step S23). In a case where the validity can be verified through electric power matching, the node 100 generates a matching validity proof (zero-knowledge proof) (step S24). The node 100 generates an electric power matching record including the generated matching validity proof (step S25). Then, the node 100 transmits an electric power supply right transaction record including the generated electric power matching record (for consumption by electric power consumption facility 52a) to the blockchain system 30 (step S26). It is assumed that the node 400 in the blockchain system 30 receive this electric power supply right transaction record.

The smart contract 410 of the node 400 verifies the matching validity proof (step S27). The smart contract 410 records the electric power supply right transaction record in the blockchain 60 only in a case where content of the matching is correct (step S28). As a result, the electric power supply right on which the electric power matching has been performed (electric power supply right set to input of electric power supply right transaction) is terminated.

Note that the node 100 of the electric power retailer 43a can includes output for transferring the electric power supply right corresponding to the extra electric power in the electric power matching to the node 100, in the electric power supply right transaction record transmitted in step S26. By recording this electric power supply right transaction record in the blockchain 60, an extra electric power supply right in the electric power matching is returned to oneself as a change.

The node 100 of the electric power retailer 43a saves data used for the electric power matching (smart meter record for each 30 minutes, commitment random number, or the like) in a local database (step S29). The node 100 can use the saved data for issuance of a non-fossil certificate or the like.

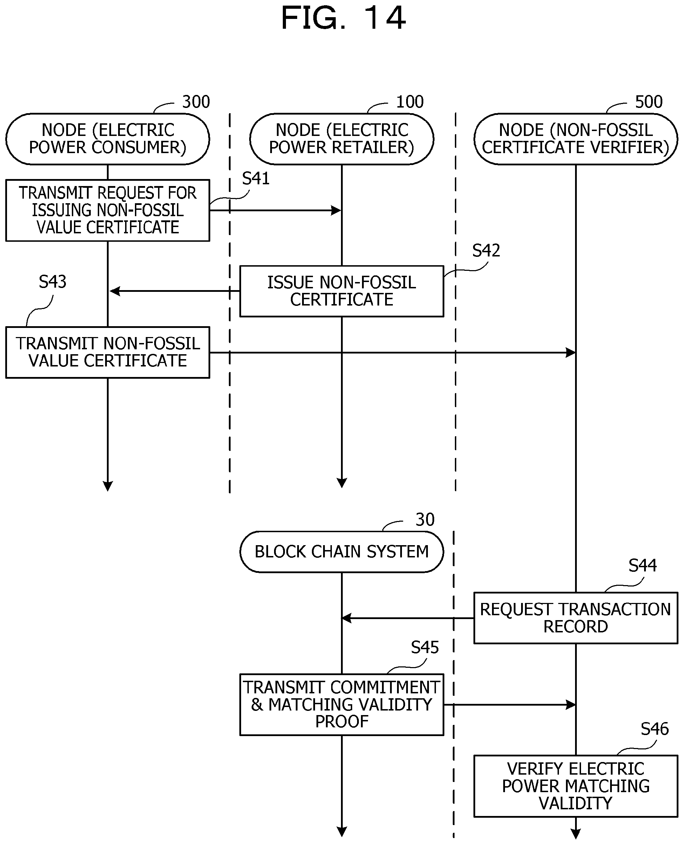

FIG. 14 is a sequence diagram illustrating an example of a processing procedure of issuance and verification of a non-fossil certificate. For example, it is assumed that electric power of the electric power supply right acquired by the electric power consumer 42a as an electric power supplier for the electric power consumption facility 52a be electric power generated by a physical electric power generation facility that generates electric power using non-fossil energy. In this case, the electric power consumer 42a transmits a request for issuing a non-fossil certificate regarding the electric power supply right to the node 100 of the electric power retailer 43a, using the node 300 (step S41). The node 100 issues a non-fossil certificate including content of an electric power supply right transaction record corresponding to the electric power matching, based on the data saved at the time of electric power matching of the electric power supply right (step S42). The node 100 transmits the issued non-fossil certificate to the node 300.

The node 300 transmits the non-fossil certificate to the node 500 of the party to which the non-fossil value is desired to be proved (for example, non-fossil value verifier 44) (step S43). The node 500 requests the blockchain system 30 to record the transaction (step S44). The blockchain system 30 transmits a total electric power amount commitment and a matching validity proof of the designated transaction to the node 500 (step S45). The node 500 verifies that the electric power matching is valid by performing predetermined calculation based on the total electric power amount commitment and the matching validity proof (step S46). For example, a physical electric power generation facility ID of the physical electric power generation facility that generates electric power using the non-fossil energy is registered in the node 500 of the non-fossil value verifier 44 in advance. The non-fossil value verifier 44 verifies the validity of the physical electric power generation facility ID of the physical electric power generation facility indicated in the non-fossil certificate and confirms, in advance, that the valid physical electric power generation facility ID is registered as the physical electric power generation facility ID of the physical electric power generation facility that generates electric power using the non-fossil energy.

As a result, it is confirmed that the electric power consumption facility 52a operated by the electric power consumer 42a consumes the electric power generated using the non-fossil energy.

### [Other Embodiments]

In the second embodiment, an example of a case where the resource generated using the non-fossil energy is electric power has been described. However, the second embodiment can be used for a transaction of other resources such as hydrogen or biofuel.

The above description merely indicates the principle of the present invention. Moreover, numerous modifications and alterations can be made by those skilled in the art. The present invention is not limited to the exact configuration and application examples illustrated and described above, and all corresponding modifications and equivalents are regarded within the scope of the present invention according to appended claims and equivalents thereof.

### CITATION LIST

### PATENT DOCUMENT

Patent Document 1: Japanese Laid-open Patent Publication No. 2020-107202

### REFERENCE SIGNS LIST

- 1, 2: producer
- 3: consumer
- 4: blockchain system
- 5: blockchain
- 5a, 5b: transaction record
- 6: first data
- 7: second data
- 8: third data
- 8a: commitment function value
- 8b: proof information
- 10: information processing device
- 11: storage unit
- 12: processing unit

## Claims

1. A data storage method implemented by a computer, the method comprising:
acquiring first data that indicates a production record of a transaction resource produced by a producer and second data that indicates a consumption record of the transaction resource consumed by a consumer;
generating proof information that proves that a condition of consistency between the first data and the second data is satisfied regarding allocation of the transaction resource for the production record of the producer as a supplier of the transaction resource for the consumption record of the consumer;
generating third data that includes the proof information and has a data size smaller than a total data size of the first data and the second data; and
storing a transaction record that includes the third data and indicates that the transaction resource is consumed by the consumer, in a blockchain that stores a transaction history of a supply right of the transaction resource produced by the producer.

2. The data storage method according to claim 1, wherein
the storing of the transaction record includes
generating, by a first computer, the transaction record,
transmitting, by the first computer, the generated transaction record to a second computer that stores the blockchain,
verifying, by the second computer, that the condition of consistency between the first data and the second data is satisfied, based on the proof information, and
storing, by the second computer, the transaction record in the blockchain in a case where a check is correctly performed.

3. The data storage method according to claim 1 or 2, wherein
the generating of the proof information includes
comparing, for each unit period in a predetermined resource supply period, the production record indicated in the first data and the consumption record indicated in the second data, and
generating the proof information that proves that a condition that there is a production amount that covers a consumption amount for each unit period.

4. The data storage method according to any one of claims 1 to 3, wherein
the generating of the proof information includes
calculating a commitment function value regarding a total amount of the consumption record indicated in the second data, and
generating the proof information that proves that the commitment function value is correct in addition to that the condition of consistency between the first data and the second data is satisfied.

5. The data storage method according to any one of claims 1 to 4, wherein
transaction information of a right to supply the transaction resource on the blockchain is managed with an unspent transaction output (UTXO) method, and the transaction resource to be a target of input and output in the UTXO method is specified based on a production period and a production amount per unit time of the producer.

6. The data storage method according to any one of claims 1 to 5, wherein
the first data includes a first electronic signature of the producer regarding the production record,
the second data includes a second electronic signature of the consumer regarding the consumption record, and
the generating of the proof information includes generating the proof information that proves that the first electronic signature of the producer and the second electronic signature of the consumer are valid, in addition to that the condition of consistency between the first data and the second data is satisfied.

7. The data storage method according to any one of claims 1 to 6, wherein
the storing of the transaction record includes storing, in the blockchain, the transaction record that includes a signature of a person who has a right to supply the transaction resource in the blockchain.

8. A data storage program for causing a computer to perform processing comprising:
acquiring first data that indicates a production record of a transaction resource produced by a producer and second data that indicates a consumption record of the transaction resource consumed by a consumer;
generating proof information that proves that a condition of consistency between the first data and the second data is satisfied regarding allocation of the transaction resource for the production record of the producer as a supplier of the transaction resource for the consumption record of the consumer;
generating third data that includes the proof information and has a data size smaller than a total data size of the first data and the second data; and
storing a transaction record that includes the third data and indicates that the transaction resource is consumed by the consumer, in a blockchain that stores a transaction history of a supply right of the transaction resource produced by the producer.

9. An information processing apparatus comprising:
a storage unit configured to store first data and second data, the first data indicating a production record of a transaction resource produced by a producer, the second data indicating a consumption record of the transaction resource consumed by a consumer; and
a processing unit configured to perform processing including:
generating proof information that proves that a condition of consistency between the first data and the second data is satisfied regarding allocation of the transaction resource for the production record of the producer as a supplier of the transaction resource for the consumption record of the consumer,
generating third data that includes the proof information and has a data size smaller than a total data size of the first data and the second data, and
storing a transaction record that includes the third data and indicates that the transaction resource is consumed by the consumer, in a blockchain that stores a transaction history of a supply right of the transaction resource produced by the producer.
